# EUROPÄISCHE PATENTSCHRIFT

(11) **EP 2 027 980 B1**
(45) Veröffentlichungstag und Bekanntmachung des Hinweises auf die Patenterteilung: **19.01.2011**
(21) Anmeldenummer: 08164946.9
(22) Anmeldetag: 12.05.2006
(51) Int. Cl.: B29C 35/00, B29C 45/73

(54) **Geschlossenes Kühlsystem für Werkzeuge von Kunststoffverarbeitungsmaschinen**
Closed cooling system for tools of plastics processing machines
Système de refroidissement fermé pour des outils de machines transformation des plastiques

(30) Priorität: 12.05.2005 DE 102005021961; 09.12.2005 DE 102005058963
(43) Veröffentlichungstag der Anmeldung: 25.02.2009
(62) Teilanmeldung aus: 06763133.3
(73) Patentinhaber: Stemke Kunststofftechnik GmbH, 04720 Döbeln (DE)
(72) Erfinder: Stemke, Lothar, 04720 Döbeln (DE)
(74) Vertreter: Bauer, Steffen

(56) Entgegenhaltungen:
- JP-A- 4 065 214
- US-A- 3 667 248
- US-A- 4 063 867
- US-A- 4 091 069
- US-A1- 2003 039 716

## Beschreibung

Werkzeuge von Kunststoffverarbeitungsmaschinen werden punktuell und/oder flächig gekühlt, um der Formmasse nach dem Einbringen gezielt Wärme zu entziehen, so dass ein möglichst schnelles Abkühlen zu kurzen Taktzeiten beitragen kann. Besonders zu beachten ist jedoch, dass der Wärmeentzug die Qualität der Formstücke nicht beeinträchtigt.

Aus der DE 199 18 428 C1 ist ein Verfahren zur Kühlung von Werkzeugen mit Kohlendioxid (CO₂) bekannt, wonach Werkzeugbereiche mit zu hohen Temperaturen gezielt gekühlt werden sollen. Das Anwendungsgebiet des bekannten Verfahrens erstreckt sich über sinterporöse Materialien hinaus auf Werkzeuge, die aus massiven Materialien wie Stahl, Aluminium, Kupfer oder sonstigen Legierungen bestehen. Ein Vorteil des bekannten Verfahrens zeigt sich in der Vermeidung von örtlich auftretenden Temperaturspitzen, wodurch die Zykluszeiten und Formteilfehler reduziert werden können. Das bekannte Verfahren ist dadurch gekennzeichnet, dass über ein Zuleitungssystem unter Druck befindliches Kohlendioxid in dafür vorgesehene Werkzeugbereiche geleitet wird, um diese Bereiche durch eine gezielte Expansion des Kohlendioxids zu kühlen. Die bevorzugten Werkzeugbereiche sind jene, an denen aufgrund zu hoher Werkzeugtemperaturen Glanzstellen oder Glanzunterschiede an den Kunststoffartikeln entstehen, Einfallstellen auftreten, die Entformung Probleme bereitet sowie allgemein zu hohe und/oder zu Schädigungen des Werkzeugs führende Temperaturen entstehen können. Die Zuführung des verdichteten Kohlendioxids erfolgt über kleine Röhrchen oder flexible Schläuche. Bei Austritt aus den Zuleitungen entspannt sich das verdichtete Kohlendioxid, wodurch dem umgebenden Material Wärme entzogen wird. Durch nachströmendes Kohlendioxid wird das expandierte Gas über den Freiraum zwischen der Zuleitung und der Wandung des Expansionsraumes aus dem Werkzeug transportiert, so dass es in die Atmosphäre entweichen kann oder über ein spezielles System aufgefangen und anschließend wieder aufbereitet wird. Das Entweichen des Kohlendioxids ist ökologisch bedenklich, da hierdurch dem Treibhauseffekt Vorschub geleistet werden kann. Andererseits sind das Auffangen und Aufbereiten des Gases mit nicht unerheblichem technischem Aufwand und somit zusätzlichen Kosten verbunden, da die Aufbereitung eine entsprechende Anlage erfordert und darüber hinaus das aufgefangene Gas dieser Anlage zugeführt werden muss.

Aus US-3,667,248-A ist ein Kühlsystem nach dem Oberbegriff von Anspruch 1 bekannt.

Daraus ergibt sich als Aufgabe der Erfindung, ein Kühlsystem für Werkzeuge von Kunststoffverarbeitungsmaschinen zu schaffen, das unabhängig von verwendetem Kühlmittel und Werkzeugmaterial eine Umweltbelastung vermeidet und die Reduzierung der Taktzeiten bei hoher Effizienz ermöglicht.

Die Aufgabe wird durch ein Kühlsystem nach Anspruch 1 gelöst.

Die Erfindung dadurch gekennzeichnet, dass die aus Zuführ- und Abströmleitung bestehende Koaxialleitung mittels einer Koaxialmuffe an die Bohrung angeschlossen ist. Dabei ist die Zuführleitung koaxial durch den Muffenkörper geführt und ragt in die Bohrung hinein, während die Muffe die Abströmleitung mit der Bohrung verbindet und die Bohrung nach außen abdichtet. Die Koaxialleitung wird mittels eines auf der dem Werkzeug abgewandten Seite angeordneten Befestigungsmittels in der Muffe gehalten. Die erfindungsgemäße Koaxialmuffe ist vorteilhaft auf der dem Werkzeug abgewandten Seite zylindrisch ausgebildet. Der zylindrische Bereich kann mit einem Außengewinde versehen sein, so dass die Koaxialleitung mittels einer Überwurfmutter, durch welche die Koaxialleitung geführt ist, in der Muffe frikativ fixierbar ist. Der zylindrische Bereich kann andererseits mit einem Innengewinde versehen sein, so dass die Koaxialleitung mittels einer Hohlschraube, durch welche die Koaxialleitung geführt ist, in der Muffe frikativ fixierbar ist. Für eine vor allem mit der Werkzeugaußenebene bündige Verlegung der Koaxialleitung besonders vorteilhafte Ausgestaltung der Koaxialmuffe besteht darin, dass die dem Werkzeug abgewandte Austrittsöffnung der Hohlschraube schalltrichterförmig ausgebildet ist und die Trichterwange wenigstens einen Angriffspunkt für ein Werkzeug aufweist, so dass ein Drehmoment auf die Hohlschraube ausgeübt werden kann. Eine weitere vorteilhafte Weiterbildung der Erfindung besteht darin, dass die Koaxialmuffe auf der Werkzeugseite rohrförmig verlängert ausgebildet ist, wobei die Abströmleitung an den Rohrbereich angeschlossen ist, die Zuführleitung in den Rohrbereich hinein ragt und das freie Ende des Rohrbereichs dicht verschlossen ist. Damit ist es sowohl möglich, besonders tiefe Bohrungen gezielt mit Kühlmittel zu versorgen als insbesondere auch Hohlräume im Werkzeug wie beispielsweise Leitungsröhren für die Flächenkühlung oder Messleitungskanäle zu durchqueren.

In aller Regel ist zur Kühlung der Werkzeuge eine Vielzahl von Kühlstellen erforderlich. Zu deren Versorgung mit Kühlmittel ist ein Kanalverteiler mit einem ersten und einem zweiten Kanal vorgesehen, dessen erster Kanal über die Zuführleitung mit dem Verdichterausgang und dessen zweiter Kanal über die Abströmleitung mit dem Verdichtereingang verbunden sind, wobei der erste Kanal über eine Vielzahl von Ausgängen und der zweite Kanal über die gleiche Anzahl von Eingängen verfügt, so dass die Innenleitungen von Koaxialleitungen an die Ausgänge des ersten Kanals und die Außenleitungen von Koaxialleitungen an die Eingänge des zweiten Kanals anschließbar sind. Dabei sind die Koaxialleitungen mittels Koaxialmuffen an die Kanäle angeschlossen. Die Verbindungsleitungen zwischen dem Verdichter und dem Kanalverteiler können sowohl als Einzel- oder Parallelleitungen oder auch als Koaxialleitung ausgebildet sein. Darüber hinaus ist es für die Herbeiführung eines effizienten Wärmeabtransports vorteilhaft, wenn wenigstens ein Ausgang des ersten Kanals und/oder ein Eingang des zweiten Kanals über eine Drossel mit dem Kanal verbunden sind, so dass jedem Expansionsraum punktuell die richtige Menge Kühlmittel zugeführt werden kann. Besonders vorteilhaft ist dann, jede Drossel an eine Steuer- oder Regeleinrichtung anzuschließen, so dass ein Kühlsystem in der Art einer common-rail-Anlage gebildet wird. Ergänzt wird die Erfindung, wenn die Zuführleitung und die Abströmleitung als Einzelleitungen oder als Doppelleitung ausgebildet sind, deren Anschluss mittels einer Parallelmuffe erfolgt, indem die Zuführleitung durch den Muffenkörper so tief wie möglich in die Bohrung geführt ist und der Durchgang durch den Muffenkörper die Abströmleitung mit der Bohrung verbindet, so dass bei mehreren Kühlstellen in einem Werkzeug Koaxialleitungen, Einzelleitungen und Doppelleitungen geeignet kombiniert sein können.

Mittels der Zeichnung werden die Merkmale der Erfindung anhand eines bevorzugten Ausführungsbeispiels im Einzelnen beschrieben. Die Zeichnung zeigt in
- Fig. 1: ein Funktionsschema eines erfindungsgemäßen Kühlsystems;
- Fig. 2: eine schematisierte Koaxialmuffe;
- Fig. 3: eine Koaxialmuffe nach Fig. 2 mit Überwurfmutter;
- Fig. 4: eine Koaxialmuffe nach Fig. 2 mit Hohlschraube;
- Fig. 5: eine Koaxialmuffe nach Fig. 2 in Form einer Hohlschraube mit schalltrich- terförmiger Austrittsöffnung;
- Fig. 6: eine Koaxialmuffe nach Fig. 5 mit Rohrverlängerung;
- Fig. 7: eine erste Ausführungsform eines Kanalverteilers und
- Fig. 8: eine zweite Ausführungsform eines Kanalverteilers

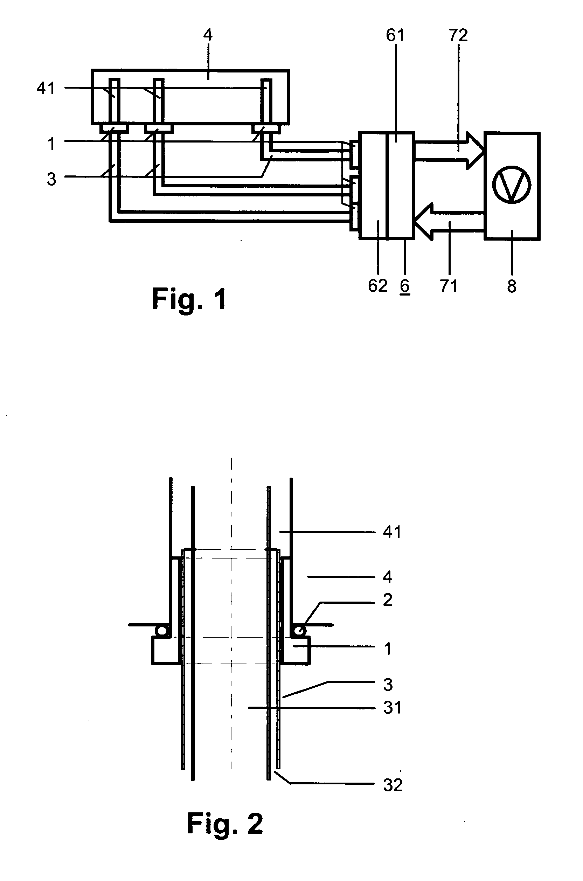

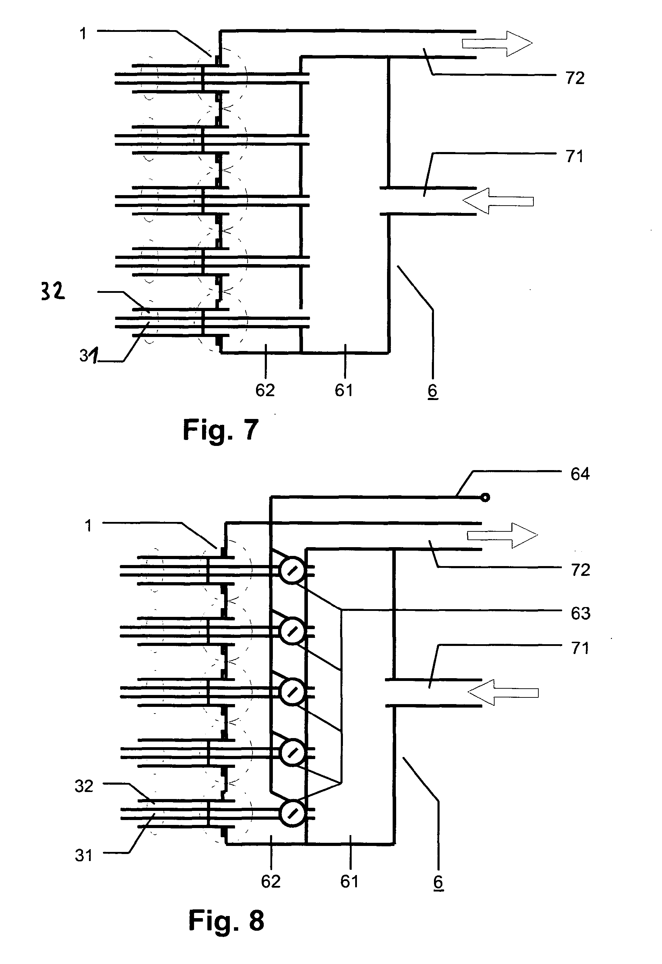

Fig. 1 zeigt ein Werkzeug 4, in dem eine Mehrzahl Expansionsbohrungen 41 angeordnet sind. In der Praxis befinden sich die Expansionsbohrungen 41 in Vorsprüngen, Rippen und dergleichen, da diese Zonen besonders gekühlt werden müssen, um eine möglichst schnelle Abkühlung und damit möglichst kurze Taktzeiten zu erzielen. An die Expansionsbohrungen 41 sind mittels Koaxialmuffen 1 Koaxialleitungen 3 angeschlossen, wobei die inneren Zuführleitungen 31 (siehe unten) so weit wie möglich in die Expansionsbohrungen 41 ragen, während die Ausgänge der Expansionsbohrungen 41 mit äußeren Abströmleitungen 32 (siehe unten) verbunden sind. Die Ausbildung der Koaxialmuffen 1 wird unten im Einzelnen beschrieben. Die Koaxialleitungen 3 sind an einen Kanalverteiler 6 geführt, der nachfolgend mit Bezug auf Fig. 7 und 8 erläutert wird. Der Kanalverteiler 6 umfasst einen ersten Kanal 61, mit dem die inneren Zuführleitungen 31 der Koaxialleitungen 3 verbunden sind, und einen zweiten Kanal 62, mit dem die äußeren Abströmleitungen 32 der Koaxialleitungen 3 verbunden sind, wobei vorteilhaft der Anschluss der Koaxialleitungen 3 mittels Koaxialmuffen 1 erfolgt. Der erste Kanal 61 bildet einen Zuführkanal und der zweite Kanal 62 einen Abströmkanal. Der Zuführkanal 61 ist mittels einer Druckleitung 71 an den Ausgang eines Verdichters 8 angeschlossen. Der Abströmkanal hingegen ist mittels einer Saugleitung 72 an den Eingang des Verdichters 8 angeschlossen. Das auf diese Weise geschlossene Kühlsystem beinhaltet eine geeignete Menge Kühlmittel.

Fig. 2 zeigt eine erfindungsgemäße Koaxialmuffe 1, die an einem Werkzeug 4 dicht befestigt ist. Die Art der Befestigung folgt dabei den Gegebenheiten des Werkzeugs 4, wobei prinzipiell die Muffe 1 mit dem Werkzeug 4 verschraubt wird und eine Ringdichtung 2 die Expansionsbohrung 41 gegen die Atmosphäre sicher abdichtet. In die Expansionsbohrung 41 ragt das freie Ende der Zuführleitung 31 als Innenleitung der durch die Muffe 1 geführten Koaxialleitung 3 so weit wie möglich hinein. Innerhalb des von der Ringdichtung 2 umschriebenen Bereiches mündet die Expansionsbohrung 41 in die Abströmleitung 32.

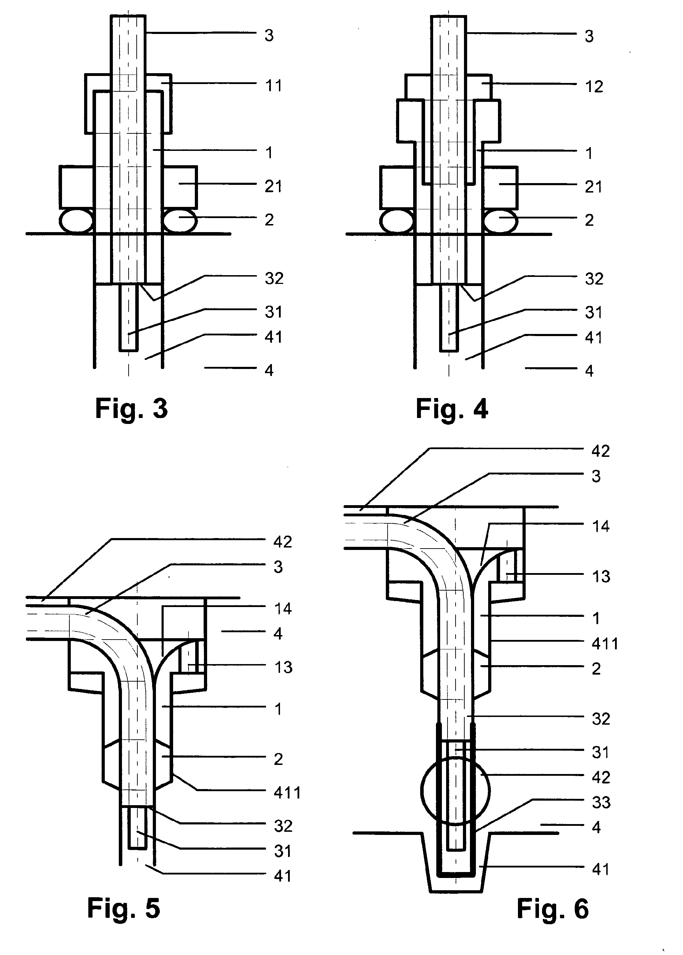

In Fig. 3 ist eine erfindungsgemäße Koaxialmuffe 1 mit einer Überwurfmutter 11 zur Halterung der Koaxialleitung 3 in der Koaxialmuffe 1 dargestellt. Die Überwurfmutter 11 ist auf dem Werkzeug abgewandten zylindrischen und mit einem Außengewinde versehenen Bereich der Koaxialmuffe 1 aufgeschraubt, so dass die aus der innen liegenden Zuführleitung 31 und der diese umhüllenden Abströmleitung 32 bestehende Koaxialleitung 3 frikativ im Muffendurchgang gehalten wird. Die Muffe 1 ist in die im Werkzeug 4 eingebrachte Expansionsbohrung 41 so eingeschraubt, dass die Expansionsbohrung 41 in die Abströmleitung 32 mündet und andererseits nach außen mittels der Ringdichtung 2 abgedichtet ist, während die Zuführleitung 31 in die Expansionsbohrung 41 so weit wie möglich hineinragt. Die Ringdichtung 2 ist mittels einer auf dem Muffenkörper aufgeschraubten Kontermutter 21 fixiert.

In Fig. 4 ist eine erfindungsgemäße Koaxialmuffe 1 mit einer Hohlschraube 12 zur Halterung der Koaxialleitung 3 in der Koaxialmuffe 1 dargestellt. Die Hohlschraube 12 ist in den Werkzeug abgewandten zylindrischen und mit einem Innengewinde versehenen Bereich der Koaxialmuffe 1 eingeschraubt, so dass die aus der innen liegenden Zuführleitung 31 und der diese umhüllenden Abströmleitung 32 bestehende Koaxialleitung 3 frikativ im Muffendurchgang gehalten wird. Die Muffe 1 ist in die im Werkzeug 4 eingebrachte Expansionsbohrung 41 so eingeschraubt, dass die Expansionsbohrung 41 in die Abströmleitung 32 mündet und andererseits nach außen mittels der Ringdichtung 2 abgedichtet ist, während die Zuführleitung 31 in die Expansionsbohrung 41 so weit wie möglich hineinragt. Die Ringdichtung 2 ist mittels einer auf dem Muffenkörper aufgeschraubten Kontermutter 21 fixiert.

In Fig. 5 ist eine erfindungsgemäße Koaxialmuffe 1 in Form einer Hohlschraube mit schalltrichterförmiger Austrittsöffnung 14 zur Halterung der Koaxialleitung 3 dargestellt. Die Hohlschraubenmuffe 1 ist in die im Werkzeug 4 eingebrachte Expansionsbohrung 41 so eingeschraubt, dass die Expansionsbohrung 41 in die Abströmleitung 32 mündet und andererseits nach außen mittels der Ringdichtung 2 abgedichtet ist, während die Zuführleitung 31 in die Expansionsbohrung 41 so weit wie möglich hineinragt. Die freie Seite des Werkzeugs 4 ist mit Leitungskanälen 42 versehen, in denen die Koaxialleitungen 3 bündig mit der Oberfläche verlegt sind. Die Expansionsbohrungen 41 münden deshalb in einen Bereich 411 mit größerem Durchmesser, der mit einem Innengewinde versehen ist, in das die Hohlschraubenmuffe 1 eingeschraubt ist und hierbei die Ringdichtung 2 selbst fixiert, wodurch wiederum die Koaxialleitung 3 frikativ im Muffendurchgang gehalten wird. Vorteilhaft ist die Wange der trichterförmigen Austrittsöffnung 14 mit wenigstens einer außerhalb der Muffenachse angeordneten Bohrung 13 versehen, in die ein geeignet geformter Stiftschlüssel eingreifen kann, so dass zum Zweck des Ein- bzw. Ausschraubens der Hohlschraubenmuffe 1 ein Drehmoment ausgeübt werden kann und die Wange der Trichteröffnung 14 dennoch glatt und mit einem geeigneten Krümmungsradius ausgestattet bleibt, so dass die Koaxialleitung 3 knickfrei durch die Hohlschraubenmuffe 1 geführt ist.

Fig. 6 zeigt eine Hohlschraubenmuffe 1 nach Fig. 5, wobei die Koaxialleitung 3 auf der Werkzeugseite rohrförmig verlängert ausgebildet ist, indem die Abströmleitung 32 an einen Rohrbereich 33 angeschlossen ist, die Zuführleitung 31 indes in den Rohrbereich 33 hinein ragt und das freie Ende des Rohrbereichs 33 dicht verschlossen ist. Damit ist es sowohl möglich, besonders tiefe Expansionsbohrungen 41 gezielt mit Kühlmittel zu versorgen als insbesondere auch Hohlräume 42 im Werkzeug 4 wie beispielsweise Leitungsröhren für die Flächenkühlung oder Messleitungskanäle zu durchqueren.

In Fig. 7 ist ein Kanalverteiler 6 dargestellt, an den eine Vielzahl Koaxialleitungen 3 sowie eine Saugleitung 72 und eine Druckleitung 71 geführt sind. Die Koaxialleitungen 3 sind wie an einem Werkzeug mittels erfindungsgemäßer Koaxialmuffen 1 mit dem Kanalverteiler 6 verbunden. Der Kanalverteiler 6 besteht aus einem Zuführkanal 61 und einem Abströmkanal 62, wobei die Zuführleitungen 31 der Koaxialleitungen 3 den Abströmkanal 62 durchqueren und in den Zuführkanal 61 münden, während die Abströmleitungen 32 der Koaxialleitungen 3 mit dem Abströmkanal 62 verbunden sind.

In Fig. 8 ist ein Kanalverteiler 6 dargestellt, an den eine Vielzahl Koaxialleitungen 3 sowie eine Saugleitung 72 und eine Druckleitung 71 geführt sind. Die Koaxialleitungen 3 sind wie an einem Werkzeug mittels erfindungsgemäßer Koaxialmuffen 1 mit dem Kanalverteiler 6 verbunden. Der Kanalverteiler 6 besteht aus einem Zuführkanal 61 und einem Abströmkanal 62, wobei die Zuführleitungen 31 der Koaxialleitungen 3 den Abströmkanal 62 durchqueren und in den Zuführkanal 61 münden, während die Abströmleitungen 32 der Koaxialleitungen 3 mit dem Abströmkanal 62 verbunden sind. Damit die Kühlmittelzufuhr für jede Expansionsbohrung zeitlich und/oder bezüglich des Volumens den Bedingungen entsprechend optimiert werden kann, ist der Kanalverteiler 6 mit Steuer- bzw. Regeleinrichtungen ausgestattet, indem die Zuführleitungen 31 über Drosseln 63 mit dem Zuführkanal 61 verbunden sind. Die Drosseln 63 wiederum sind über ein geeignet ausgebildetes Steuerleitungssystem 64 mit einem Regler verbunden, der beispielsweise in der Nähe der Expansionsbohrungen gemessene Temperaturen sowie Parameter von Werkzeug, Material und Werkstück verarbeitend die Drosselstellungen bestimmt, wodurch eine optimale Abkühlung des Werkzeugs 4 und des Werkstücks ohne Beeinträchtigung der Qualität die Taktzeit reduziert.

## Patentansprüche

1. Kühlsystem für Werkzeuge von Kunststoffverarbeitungsmäschinen, indem das Werkzeug (4) mit wenigstens einer Bohrung (41) versehen ist, welher mittels einer Zuführungsleltung (71, 31) Kühlmittel zugeführt wird und die Bohrung (41) in eine Abströmleitung (72, 32) mündet, die mit dem Eingang eines Verdichters (8) verbunden ist, an dessen Ausgang die Zuführungsleitung (71, 31) angeschlossen ist, und ein Kanalverteiler (6) mit einem ersten (61) und einem zweiten Kanal (62) vorgesehen ist, dessen erster Kanal (61) über eine Zuführungsleitung (71) mit dem Verdichterausgang und dessen zweiter Kanal (62) über eine Abströmleitung (72) mit dem Verdichtereingang verbunden sind, **dadurch gekennzeichnet, dass** die Zuführungsleitung (71, 31) und die Abströmleitung (72, 32) in einer die Bohrungen (41) mit dem Kanalverteiler (6) verbindenden Koaxialleitung (3) zusammengefasst sind, indem die Zuführungsleitung (71, 31) innen liegend und die Abströmleitung (72, 32) die Zuführungsleitung (71, 31) umhüllend angeordnet sind und die Koaxialleitung (3) mittels einer Koaxialmuffe (1) an die Bohrung (41) angeschlossen ist, indem die Zuführungsleitung (31) koaxial durch den Muffenkörper geführt ist und in die Bohrung (41) hinein ragt, während die Muffe (1) die Abströmleitung (32) mit der Bohrung (41) verbindet und die Bohrung (41) nach außen abdichtet, wobei die Koaxialleitung (3) mittels eines auf der dem Werkzeug (4) abgewandten Seite angeordneten Befestigungsmittels (11, 12) in der Muffe (1) gehalten wird, und über wenigstens eine Koaxialmuffe (1) die Innenleitung (31) der Koaxialleitung (3) an einen Ausgang des ersten Kanals (61) und die Außenleitung (32) der Koaxialleitung (3) an einen Eingang des zweiten Kanals (62) angeschlossen sind.

2. Kühlsystem nach Anspruch 1, **dadurch gekennzeichnet, dass** die Koaxialmuffe (1) auf der dem Werkzeug (4) abgewandten Seite zylindrisch ausgebildet ist und der zylindrische Bereich mit einem Außengewinde versehen ist, so dass die Koaxialleitung (3) mittels einer Überwurfmutter (11), durch welche die Koaxialleitung (3) geführt ist, in der Muffe (1) frikativ fixierbar ist.

3. Kühlsystem nach Anspruch 1, **dadurch gekennzeichnet, dass** die Koaxialmuffe (1) auf der dem Werkzeug (4) abgewandten Seite zylindrisch ausgebildet ist und der zylindrische Bereich mit einem Innengewinde versehen ist, so dass die Koaxialleitung (3) mittels einer Hohlschraube (12), durch welche die Koaxialleitung (3) geführt ist, in der Muffe (1) frikativ fixierbar ist.

4. Kühlsystem nach Anspruch 3, **dadurch gekennzeichnet, dass** die dem Werkzeug (4) abgewandte Austrittsöffnung (14) der Koaxialmuffe (1) schalltrichterförmig ausgebildet ist und die Trichterwange wenigstens einen Angriffspunkt (13) für ein Werkzeug aufweist, so dass ein Drehmoment auf die Koaxialmuffe (1) ausgeübt werden kann.

5. Kühlsystem nach Anspruch 1, 2, 3 oder 4, **dadurch gekennzeichnet, dass** die Koaxialmuffe (1) auf der Werkzeugseite rohrförmig verlängert (33) ausgebildet ist, wobei die Abströmleitung (32) an den Rohrbereich (33) angeschlossen ist, die Zuführungsleitung (31) in den Rohrbereich (33) hinein ragt und das freie Ende des Rohrbereichs (33) dicht verschlossen ist.

6. Kühlsystem nach einem der vorstehenden Ansprüche, **dadurch gekennzeichnet, dass** bei einer Mehrzahl von Bohrungen (41) der erste Kanal (61) des Kanalverteilers (6) über eine Vielzahl von Ausgängen und der zweite Kanal (62) über die gleiche Anzahl von Eingängen verfügt.

7. Kühlsystem nach Anspruch 6, **dadurch gekennzeichnet, dass** wenigstens ein Ausgang des ersten Kanals (61) und/oder ein Eingang des zweiten Kanals (62) über eine Drossel (63) mit dem Kanal verbunden ist.

8. Kühlsystem nach Anspruch 7, **dadurch** gekennzechnet, dass jede Drossel (63) an eine Steuer-oder Regeleinrichtung angeschlossen ist.

## Claims

1. Cooling system for tools of plastics processing machines, in which the tool (4) is provided with at least one bore (41) to which coolant is supplied by means of a supply line (71, 31), and the bore (41) issues into an outflow line (72, 32) connected to the inlet of a compressor (8), to the outlet of which the supply line (71, 31) is connected, and a duct distributor (6) with a first duct (61) and a second duct (62) is provided, the first duct (61) of which is connected to the compressor outlet via a supply line (71) and a second duct (62) of which is connected to the compressor inlet via an outflow line (72), **characterized in that** the supply line (71, 31) and the outflow line (72, 32) are combined in a coaxial line (3) connecting the bores (41) to the duct distributor (6), **in that** the supply line (71, 31) is arranged internally and the outflow line (72, 32) is arranged so as to envelop the supply line (71, 31), and the coaxial line (3) is connected to the bore (41) by means of a coaxial socket (1), **in that** the supply line (31) is led coaxially through the socket body and projects into the bore (41), while the socket (1) connects the outflow line (32) to the bore (41) and seals off the bore (41) outwardly, the coaxial line (3) being held in the socket (1) by a fastening means (11, 12) arranged on the side facing away from the tool (4), and, via at least one coaxial socket (1), the internal line (31) of the coaxial line (3) being connected to an outlet of the first duct (61) and the external line (32) of the coaxial line (3) being connected to an inlet of the second duct (62).

2. Cooling system according to Claim 1, **characterized in that** the coaxial socket (1) is designed cylindrically on the side facing away from the tool (4) and the cylindrical region is provided with an external thread, so that the coaxial line (3) can be fixed frictionally in the socket (1) by means of a union nut (11) through which the coaxial line (3) is led.

3. Cooling system according to Claim 1, **characterized in that** the coaxial socket (1) is designed cylindrically on the side facing away from the tool (4) and the cylindrical region is provided with an internal thread, so that the coaxial line (3) can be fixed frictionally in the socket (1) by means of a hollow screw (12) through which the coaxial line (3) is led.

4. Cooling system according to Claim 3, **characterized in that** the outflow orifice (14), facing away from the tool (4), of the coaxial socket (1) is designed in the form of a bell mouth, and the bell-mouth cheek has at least one engagement point (13) for a tool, so that a torque can be exerted on the coaxial socket (1).

5. Cooling system according to Claim 1, 2, 3 or 4, **characterized in that** the coaxial socket (1) is designed to be prolonged (33) in a tubular manner on the tool side, the outflow line (32) being connected to the tubular region (33), the supply line (31) projecting into the tubular region (33) at the free end of the tubular region (33) being closed sealingly.

6. Cooling system according to one of the preceding claims, **characterized in that**, in the case of a plurality of bores (41), the first duct (61) of the duct distributor (6) has a multiplicity of outlets and the second duct (62) has the same number of inlets.

7. Cooling system according to Claim 6, **characterized in that** at least one outlet of the first duct (61) and/or inlet of the second duct (62) are/is connected to the duct via a throttle (63).

8. Cooling system according to Claim 7, **characterized in that** each throttle (63) is connected to a control or regulating device.

## Revendications

1. Système de refroidissement pour outils de machines de traitement de matières synthétiques, dans lequel l'outil (4) est doté
d'au moins un alésage (41) auquel un fluide de refroidissement est amené au moyen d'un conduit d'amenée (71, 31),
l'alésage (41) débouchant dans un conduit de sortie (72, 32) relié à l'entrée d'un compresseur (8) à la sortie duquel le conduit d'amenée (71, 31) est raccordé,
et d'un répartiteur (6) à canaux qui présente un premier canal (61) et un deuxième canal (62), dont le premier canal (61) est relié par un conduit d'amenée (71) à la sortie du compresseur et dont le deuxième canal (62) est relié à l'entrée du compresseur par un conduit de sortie (72),
**caractérisé en ce que**
le conduit d'amenée (71, 31) et le conduit de sortie (72, 32) sont rassemblés en un conduit coaxial (3) qui relie les alésages (41) au répartiteur (6) à canaux,
**en ce que** le conduit d'amenée (71, 31) est situé à l'intérieur et le conduit de sortie (72, 32) entoure le conduit d'amenée (71, 31),
**en ce que** le conduit coaxial (3) est raccordé à l'alésage (41) au moyen d'un manchon coaxial (1),
**en ce que** le conduit d'amenée (31) traverse coaxialement le corps de manchon et pénètre dans l'alésage (41) tandis que le manchon (1) relie le conduit de sortie (32) à l'alésage (41) et ferme l'alésage (41) hermétiquement vis-à-vis de l'extérieur,
**en ce que** le conduit coaxial (3) est maintenu dans le manchon (1) au moyen d'un moyen de fixation (11, 12) disposé sur le côté non tourné vers l'outil (4) et
**en ce qu'**au moins un manchon coaxial (1) raccorde le conduit intérieur (31) du conduit coaxial (3) à une sortie du premier canal (61) et le conduit extérieur (32) du conduit coaxial (3) à une entrée du deuxième canal (62).

2. Système de refroidissement selon la revendication 1, **caractérisé en ce que** le manchon coaxial (1) a une configuration cylindrique sur son côté non tourné vers l'outil (4) et **en ce que** la partie cylindrique est dotée d'un filet extérieur, de telle sorte que le conduit coaxial (3) peut être fixé par frottement dans le manchon (1) au moyen d'un écrou d'accouplement (11) que traverse le conduit coaxial (3).

3. Système de refroidissement selon la revendication 1, **caractérisé en ce que** le manchon coaxial (1) a une configuration cylindrique sur son côté non tourné vers l'outil (4) et **en ce que** la partie cylindrique est dotée d'un filet intérieur, de telle sorte que le conduit coaxial (3) peut être fixé par frottement dans le manchon (1) au moyen d'une vis creuse (12) qui est traversée par le conduit coaxial (3).

4. Système de refroidissement selon la revendication 3, **caractérisé en ce que** l'ouverture de sortie (14) du manchon coaxial (1) non tournée vers l'outil (4) a la configuration d'un entonnoir et **en ce que** la joue de l'entonnoir présente au moins un point d'engagement (13) pour un outil, ce qui permet d'exercer un couple de rotation sur le manchon coaxial (1).

5. Système de refroidissement selon les revendications 1, 2, 3 ou 4, **caractérisé en ce que** le manchon coaxial (1) est prolongé (33) en forme de tube du côté de l'outil, le conduit de sortie (32) étant raccordé à la partie tubulaire (33), le conduit d'amenée (31) pénétrant dans la partie tubulaire (33) et l'extrémité libre de la partie tubulaire (33) étant fermée de manière hermétique.

6. Système de refroidissement selon l'une des revendications précédentes, **caractérisé en ce qu'**au cas où plusieurs alésages (41) sont prévus, le premier canal (61) du répartiteur (6) à canaux dispose de plusieurs sorties et le deuxième canal (62) du même nombre d'entrées.

7. Système de refroidissement selon la revendication 6, **caractérisé en ce qu'**au moins une sortie du premier canal (61) et/ou une entrée du deuxième canal (62) sont reliées au canal par un étranglement (63).

8. Système de refroidissement selon la revendication 7, **caractérisé en ce que** chaque étranglement (63) est raccordé à un dispositif de commande ou de régulation.
